(19) Europäisches Patentamt

European Patent Office

Office européen des brevets

(11) **EP 1 553 503 A2**

(12) **EUROPEAN PATENT APPLICATION**

(43) Date of publication:
**13.07.2005 Bulletin 2005/28**

(51) Int Cl.$^7$: **G06F 17/14**

(21) Application number: **04030908.0**

(22) Date of filing: **28.12.2004**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(30) Priority: **07.01.2004 KR 2004000995**

(71) Applicant: **Samsung Electronics Co., Ltd.**
**Suwon-si, Gyeonggi-cho (KR)**

(72) Inventor: **Lee, Jeong-sang**
**Yeongdeungpo-gu Seoul (KR)**

(74) Representative: **Grünecker, Kinkeldey,**
**Stockmair & Schwanhäusser Anwaltssozietät**
**Maximilianstrasse 58**
**80538 München (DE)**

(54) **Fast fourier transform device with improved processing speed**

(57)      Disclosed is fast Fourier transform device and method for improving a processing speed. The fast Fourier transform device includes a memory part having N memory addresses at which the N data items are written, and having a structure dividing the memory addresses into even-numbered addresses and odd-numbered addresses. An address generation unit generates addresses each including bits except for the most significant bit with respect to the memory addresses. A computation part reads the data items at the even-numbered addresses and odd-numbered addresses based on the addresses generated in the address generation unit, and performing Radix-2 based butterfly computations. The fast Fourier transform device arranges the messed-up memory addresses in order in a new digit-reverse manner. Accordingly, the fast Fourier transform device operates the two butterfly computation structures at the same time so as to reduce the processing time by half as well as to simplify the implementation thereof.

FIG. 3

**Description**

This application claims benefit under 35 U.S.C. § 119 from Korean Patent Application No. 2004-00995, filed on January 7, 2004, the entire disclosure of which is incorporated herein by reference.

## BACKGROUND OF THE INVENTION

Field of the Invention:

The present invention relates to European digital broadcast receivers, and more particularly to a fast Fourier transform (FFT) device and a method with improved processing speed.

Description of the Related Art:

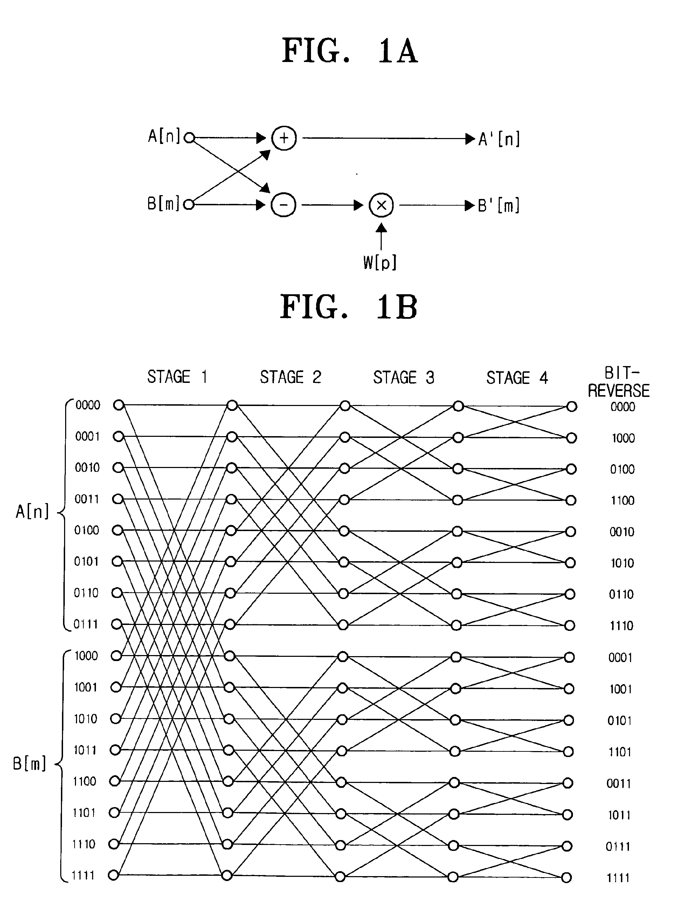

In general, the simplest way to implement a FFT is to employ the Radix-2 structure. FIG. 1A is a view showing the Radix-2 based butterfly computation structure, and FIG. 1B is a view showing a 16-point FFT process for 16 data items in the Radix-2 FFT structure. As shown in FIG. 1A and FIG. 1B, 16 addresses rewritten after the butterfly computation are messed up with respect to the addresses on 16 input data items. Thus, in general, bit-reversing is performed, with respect to read addresses, to read data items under the Radix-2 structure. For example, if a read address is "0001," data is read at a bit-reverse address of "1000."

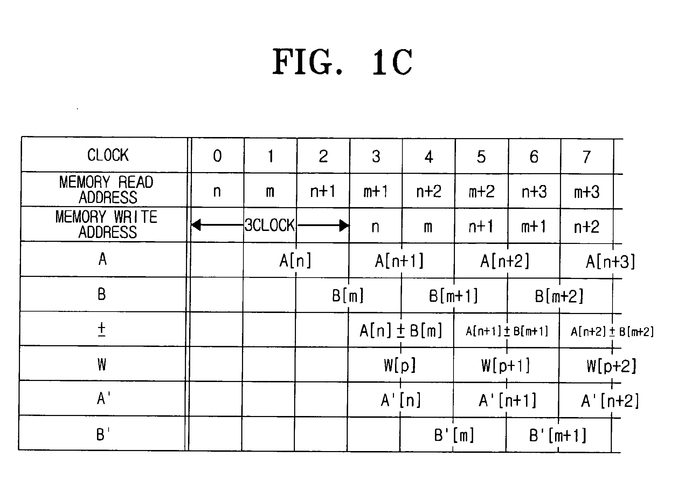

FIG. 1C is a view showing a data-processing time table in the pipeline implementation of Radix-2 FFT algorithm. In the Radix-2 based butterfly computation structure of FIG. 1, data(n) is read from a memory, the butterfly computation (A'[n]) is performed over the read data(n), and the computed data(n) is rewritten in the memory, for which three clocks are taken. For example, if the 1024-point FFT is performed in the Radix-2 based butterfly computation structure, the total number of clocks needed is 10260 since $(3 + (1024-1)) \times \log_2 1024 = 10260$. The $\log_2 1024$ denotes the number of stages.

The Radix-2 structure can be simply implemented, however, it has a relatively slow processing speed compared to other structures. Accordingly, different structures such as Radix-4, Radix-8, and so on are used in order to make up for the slow processing speed. In general, the structures higher than Radix-8 are not used due to their complexity in implementation.

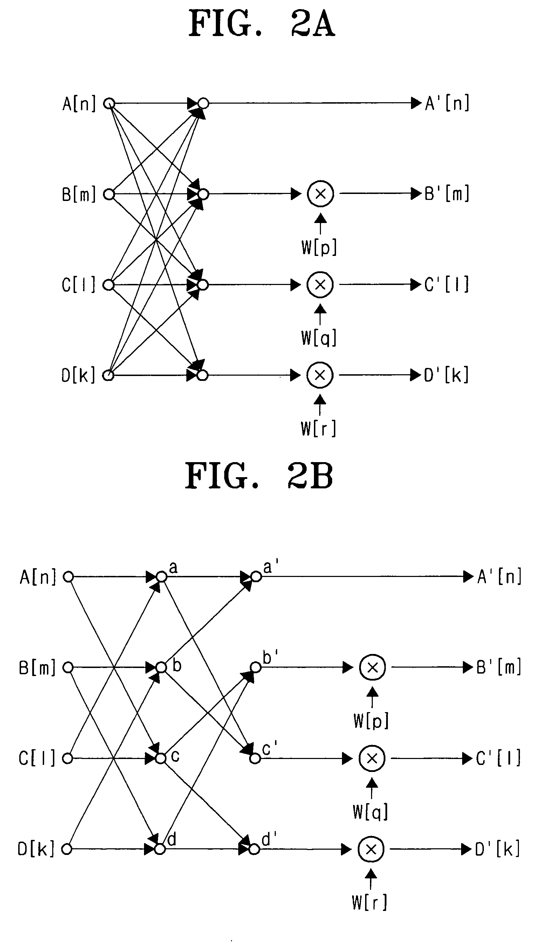

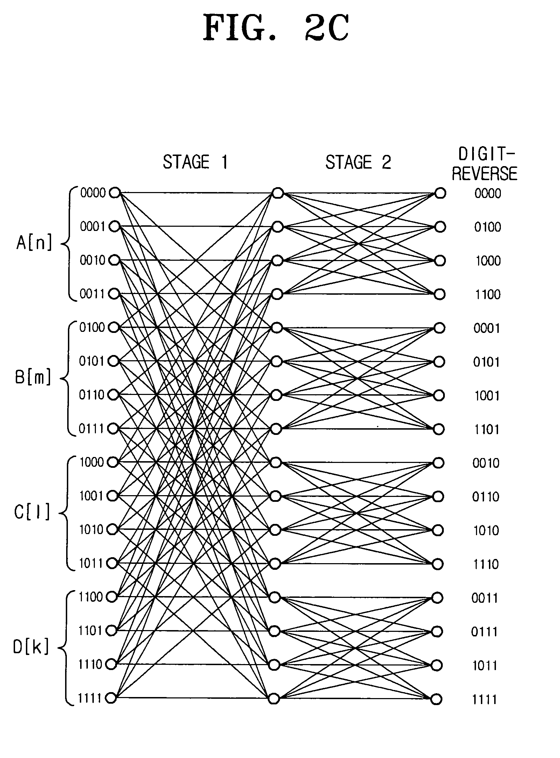

FIG. 2A is a view showing a Radix-4 based butterfly computation structure, and FIG. 2C is a view showing a 16-point FFT process in the Radix-4 structure. As shown in FIG. 2A and FIG. 2C, 16 addresses rewritten in a memory after the butterfly computation become messed up with respect to the addresses of 16 input data items. Therefore, in general, digit-reversing is performed with respect to read addresses in the Radix-4 structure in order to read data. For example, if a read address is "0001," data is read at the digit-reversed address of "0100."

The number of stages needed in the Radix-4 structure is half the number of those needed in the Radix-2 structure when the number of stages in the Radix-2 structure shown in FIG. 1B is compared to those in the Radix-4 structure shown in FIG. 2C, so the processing time in the Radix-4 structure is also reduced.

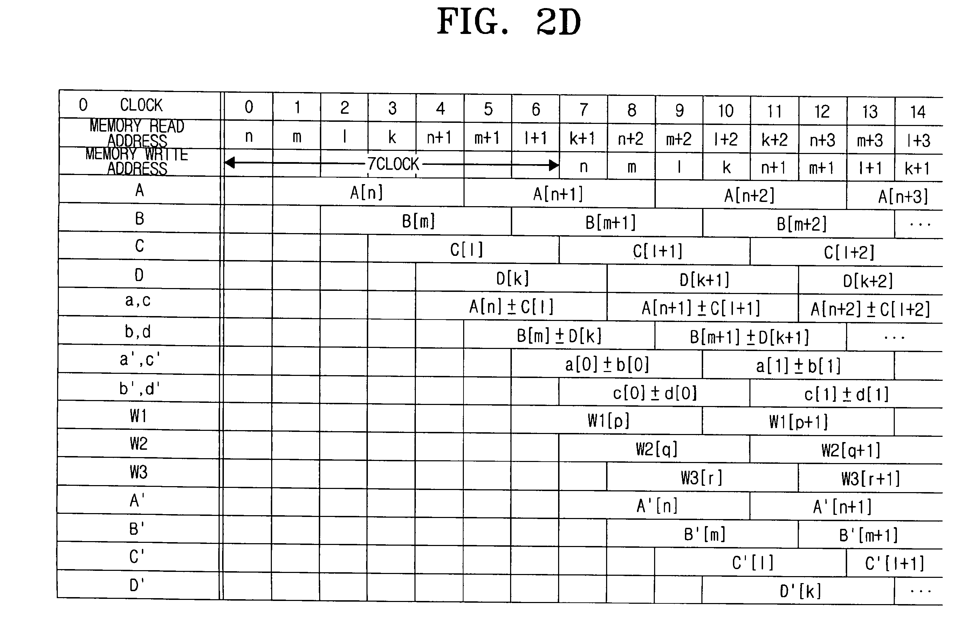

In general, the 2-input structure is adopted in the butterfly computations shown in FIG. 2B. FIG. 2D is a view showing a data-processing time table in the 2-input/16 point pipeline FFT implementation. As shown in FIG. 2D, data (n) to be processed is read from a memory, the butterfly computation (A'[n]) is performed over the read data(n), and the computed data(n) is rewritten in the memory, for which seven clocks are taken in total. For example, if the 1024-point FFT is performed based on the Radix-4, the total number of clocks needed is 5150 since $(7 + (1024-1)) \times \log_4 1024 = 5150$. In here, $\log_4 1024$ denotes the number of stages.

The Radix-4 structure needs more clocks than the Radix-2 structure in one computation structure since the butterfly computation structure of the Radix-4 structure is more complex than the Radix-2 structure, but requires about half the total number of clocks of the Radix-2 due to the pipeline implementation and the reduction of the number of stages. However, the Radix-4 structure cannot be implemented if the data items to be processed are not in the form of $4^n$ as in the 2048-point FFT or 512-point FFT.

That is, the Radix-4 structure can improve the processing speed of the Radix-2 structure, but has difficulties in using its advantage due to the limitation to the number of data items to be processed.

## SUMMARY OF THE INVENTION

The present invention has been developed in order to solve the above drawbacks and other problems associated with the conventional arrangement. An exemplary aspect of the present invention is to provide a fast Fourier transform device and method for improving a processing speed of a fast Fourier transform device having a Radix-2 based butterfly computation structure.

The foregoing and other objects and advantages are substantially realized by providing a fast Fourier transform device for processing N data items, comprising a memory part having N memory addresses at which the N data items are written, and having a structure dividing the memory addresses into even-numbered addresses and odd-numbered addresses; an address generation unit for generating addresses each comprising bits except for the least significant bit with respect to the memory addresses; and a computation part for reading the data items at the even-numbered addresses and odd-numbered addresses based on the addresses generated in the address generation unit, and performing Radix-2 based butterfly computations.

The memory part includes a first bank comprising the even-numbered memory addresses each having the least significant bit of '0'; and a second bank comprising the odd-numbered memory addresses each having the least significant bit of '1', and the address generation unit generates N/2 addresses by each of $\log_2 N$ stages.

The computation part includes a first computation unit for performing the Radix-2 based butterfly computations by use of the data items read at the even-numbered addresses based on the generated addresses; a second computation unit for performing the Radix-2 based butterfly computations by use of the data items read at the odd-numbered addresses based on the generated addresses; and a ROM for storing in advance twiddle factors for the Radix-2 based butterfly computations.

Preferably, the first computation unit performs the computations by use of the data items read at upper even-numbered addresses and lower even-numbered addresses, and the second computation unit performs the computations by use of the data items read at upper odd-numbered addresses and lower odd-numbered addresses, the first computation unit rewrites at the upper even-numbered addresses the data items computed over the data items read at the upper even-numbered addresses, and rewrites at the upper odd-numbered addresses the data items computed over the data items read at the lower even-numbered addresses, and the second computation unit rewrites at the lower even-numbered addresses the data items computed over the data items read at the upper odd-numbered addresses, and rewrites at the lower odd-numbered addresses the data items computed over the data items read at the lower odd-numbered addresses.

The fast Fourier transform device further comprises a counter for outputting count values corresponding to the N data items; and a digit-reverse address generation unit for generating digit-reverse addresses based on the count values. Preferably, the digit-reverse addresses each have the second most significant bit of a read address corresponding to a count value in place of the first most significant bit and the remaining bits of the read address in places of respective bits in a bit-reverse manner.

Another exemplary aspect of the present invention is to provide a fast Fourier transform method for performing fast Fourier transform over N data items, comprising steps of (a) writing the N input data items in a memory having N memory addresses; (b) generating N/2 addresses by each of $\log_2 N$ stages; (c) reading data items at even-numbered addresses and odd-numbered addresses of the memory based on the generated addresses, and performing Radix-2 based butterfly computations over the data items by stage, and rewriting the computed data items in the memory; (d) generating digit-reverse addresses after completing the Radix-2 based butterfly computations with respect to the $(\log_2 N)$th stage; and (e) reading the data items rewritten in the memory according to the digit-reverse addresses.

The step (c) includes steps of (c-1) performing the computations over data items read at upper even-numbered addresses and lower even-numbered addresses based on the generated addresses; (c-2) rewriting at the upper even-numbered addresses the data items computed over the data items read at the upper even-numbered addresses, rewriting at the upper odd-numbered addresses the data items computed over the data items read at the lower even-numbered addresses, rewriting at the lower even-numbered addresses the data items computed over the data items read at the upper odd-numbered addresses, and rewriting at the lower odd-numbered addresses the data items computed over the data items read at the lower odd-numbered addresses.

The step (d) includes steps of (d-1) outputting count values corresponding to the N data items after completing the Radix-2 based butterfly computations at the $(\log_2 N)$th stage; and (d-2) generating digit-reverse addresses based on the count values.

Therefore, the fast Fourier transform device according to the present invention operates two butterfly computation structures at the same time to thereby reduce the processing time by half, and can be simply implemented.

## BRIEF DESCRIPTION OF THE DRAWINGS

The above exemplary aspects and features of the present invention will be more apparent by describing certain exemplary embodiments of the present invention with reference to the accompanying drawings, in which:

FIG. 1A to FIG. 1C are views for explaining a Radix-2 based butterfly computation structure;

FIG. 2A to FIG. 2D are views for explaining a Radix-4 based butterfly computation structure;

FIG. 3 is a block diagram for schematically showing a fast Fourier transform device having the Radix-2 based butterfly computation structure according to an exemplary embodiment of the present invention;

FIG. 4 is a block diagram for showing in detail a memory part 330 and a computation part 350 in the fast Fourier transform device according to an exemplary embodiment of the present invention;

FIG. 5 is a view for showing a Radix-2 based 16-point FFT process and read/write addresses by stage according to an exemplary embodiment of the present invention;

FIG. 6 is a view for showing read addresses by stage for a Radix-2 based 16-point FFT according to an exemplary embodiment of the present invention;

FIG. 7 is a view for showing a digit-reverse address generation approach according to an exemplary embodiment of the present invention; and

FIG. 8 is a flow chart for showing operations of the Radix-2 based fast Fourier transform device according to an exemplary embodiment of the present invention.

## DETAILED DESCRIPTION OF EXEMPLARY EMBODIMENTS

Hereinafter, the present invention will be described in detail with reference to the accompanying drawings.

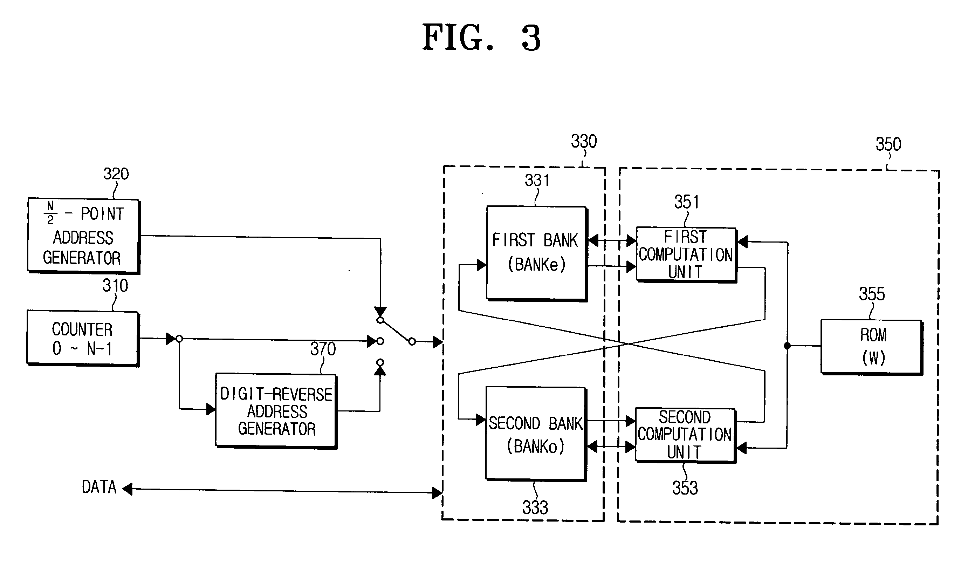

FIG. 3 is a block diagram for showing a fast Fourier transform device according to an exemplary embodiment of the present invention.

The fast Fourier transform device has a counter 310, an N/2-point address generator 320, a memory part 330, a computation part 350, and a digit-reverse address generator 370.

The counter 310 outputs count values for generating memory addresses at which N data items are read and written.

The N/2-point address generator 310 generates N/2-point read addresses to perform the Radix-2 based butterfly computation over N data items.

The N data items inputted are sorted and written in the memory part 330 as shown in Table 1 as below. That is, the data items are written in the memory part 330 as shown in Table 1 based on the count values outputted from the counter 310.

[Table 1]

|  | First bank (BANK e) | Second bank (BANK o) |
|---|---|---|
| Input data items | $D_0$ | $D_1$ |
|  | $D_2$ | $D_3$ |
|  | $D_4$ | $D_5$ |
|  | ... |  |
|  | $D_{N-2}$ | $D_{N-1}$ |

For example, if 16 input data items are written in the memory part 330 and the 16-point FFT is performed over the 16 input data items, even-numbered input data items are written at even-numbered addresses and odd-numbered input data items are written at odd-numbered addresses.

Accordingly, the memory part 330 according to the present invention has the first bank BANK e and the second bank BANK o having even-numbered addresses (even: e) and odd-numbered addresses(odd: o) respectively, as shown in Table 2.

[Table 2]

|  | First bank (BANK e) | Second bank (BANK o) |
|---|---|---|
| Memory addresses | 000e (0000) | 000o(0001) |
|  | 001e(0010) | 001o(0011) |
|  | 010e (0100) | 010o(0101) |
|  | 011e (0110) | 011o(0111) |
|  | 100e (1000) | 100o(1001) |
|  | 101e(1010) | 101o(1011) |
|  | 110e (1100) | 110o(1101) |
|  | 111e (1110) | 111o (1111) |

As shown in Table 2, the memory part 330 is divided to have a first bank 331 consisting of even-numbered addresses each having the least significant bit of '0' and a second bank 333 consisting of odd-numbered addresses each having the least significant bit of '1'. Thus, the addresses in the first bank 331 can be each expressed in combination of leading 3 bits and a letter 'e', and the addresses in the second bank 333 can be each expressed in combination of leading 3 bits and a letter 'o'.

The computation part 350 has first and second computation units 351 and 353 each of which is a Radix-2 based butterfly operator, and a ROM 355 for storing twiddle factors W used for butterfly computations. The butterfly computations by the first and second computation units 351 and 353 can be expressed in Equation 1.

[Equation 1]

$$X(m) = \overset{N-1}{\underset{n=0}{Q}} x(n) W_N^{-m}, \text{ where } W_N^{-m} = e^{-j\frac{2\pi nm}{N}},$$

where, x(n) denotes input data items, X(m) data items obtained from the butterfly computations over the x(n), and W twiddle factors.

The N/2-point address generator 320 generates two read addresses for the N/2-point FFT in order for the Radix-2 based butterfly computations to be performed, and the generated two read addresses for the N/2-point FFT are provided to the first computation unit 351 and the second computation unit 353 respectively.

Therefore, the first computation unit 351 reads data items from the even-numbered addresses of the first bank 331 corresponding to the two read addresses, and performs the Radix-2 butterfly computations, and the second computation unit 353 reads data items from the odd-numbered addresses of the second bank 333 corresponding to the two read addresses, and performs the Radix-2 based butterfly computations.

Thus, the two data items over which the butterfly computations have been performed in the first computation unit 351 and the second computation unit 353 are rewritten in the first bank 331 and the second bank 333. The Radix-2 based butterfly computations are repeated as many times as the number of stages log₂N, and detailed descriptions will be made later on a process for rewriting the computed data items in the first bank 331 and the second bank 333.

After the butterfly computations are performed as many times as the number of stages log₂N, the digit-reverse address generator 370 generates digit-reverse addresses with respect to messed-up memory addresses based on the count values of the counter 310. Therefore, the digit-reverse addresses are used to read data items over which the butterfly computations have been performed in order of the data items inputted in the fast Fourier transform device. The digit-reversing according to an exemplary embodiment of the present invention will be described later.

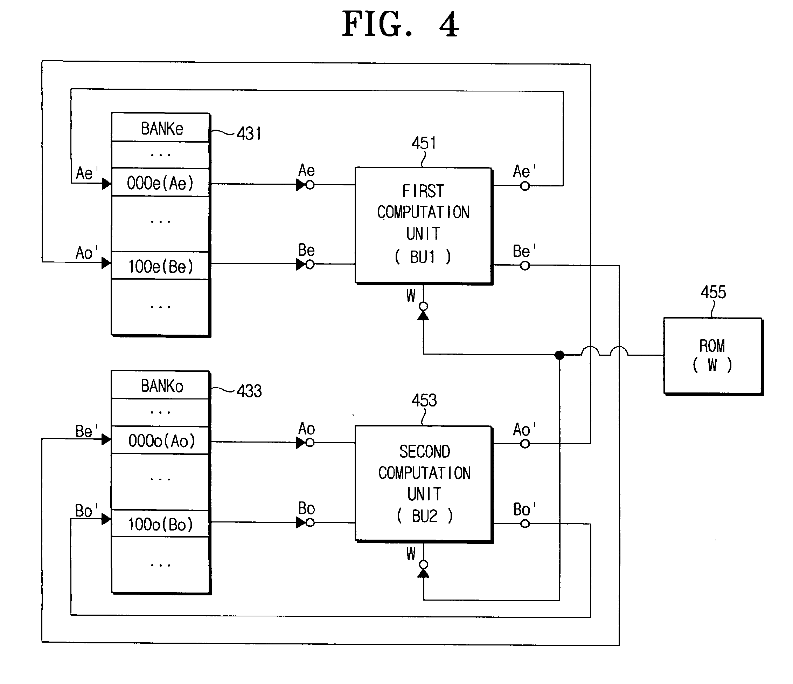

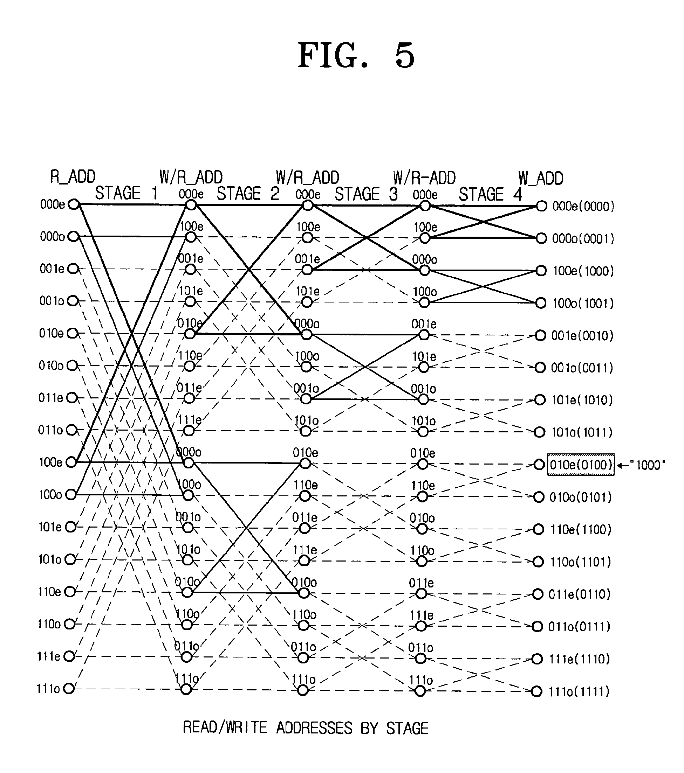

FIG. 4 is a block diagram for showing in detail the fast Fourier transform device having a Radix-4 based butterfly computation speed by use of the Radix-2 based butterfly computations according to an exemplary embodiment of the present invention. FIG. 5 is a view for showing a 16-point FFT process as an example of operations of the fast Fourier transform device shown in FIG. 4. Hereinafter, an exemplary embodiment of the present invention will be described in detail with reference to FIG. 4 and FIG. 5.

As shown in Table 1, the even-numbered input data items of 16 input data items are written in the first bank 431, and the odd-numbered input data items are written in the second bank 433 in order. Next, the N/2-point address generator (refer to a reference number 320 of FIG. 3) generates N/2-point, that is, 8-point FFT read addresses.

As shown in FIG. 4, the N/2-point address generator (refer to a reference number 320 of FIG. 3) generates and provides read addresses 000 and 100 to the first computation unit 451 and the second computation unit 453 respectively.

The first computation unit 451 reads and performs the butterfly computations over data items Ae and Be written at even-numbered addresses 000e and 100e of the first bank 431 corresponding to the provided read addresses, and the second computation unit 453 reads and performs the butterfly computations over data items Ao and Bo written at odd-numbered addresses 000o and 100o of the second bank 433 corresponding to the provided read addresses. At this time, the first and second computation units 451 and 453 use twiddle factors W of the ROM 455 to perform the Radix-2 based butterfly computations.

The first computation unit 451 outputs data items Ae' and Be' obtained from the butterfly computations over the input data items Ae and Be, and the second computation unit 453 outputs data items Ao' and Bo' obtained from the butterfly computations over the input data items Ao and Bo.

As stated above, the output data items of the first and second computation units 451 and 453 over which the computations have been performed are rewritten in the first and second banks 431 and 433 as memories.

The first and second computation units 451 and 453 rewrite the computed data items (Ae' and Be') and (Ao' and Bo') in the first and second banks 431 and 433, respectively, in the manner shown in FIG. 4.

That is, the first computation unit 451 rewrites at the upper address 000e of the first bank 431 the data item Ae' computed over the data item read at the upper address 000e, and rewrites at the upper address 000o of the second bank 433 the data item Be' computed over the data item read at the lower address 100e. The second computation unit 453 rewrites at the lower address 100e of the first bank 431 the data item Ao' computed over the data item read at the upper address 000o of the second bank 433, and rewrites at the lower address 100o of the second bank 433 the data item Bo' computed over the data item read at the lower address 100o.

As above, the Radix-2 based butterfly computations are performed at stage 1.

FIG. 5 shows the read and write addresses of the first and second banks 431 and 433 at stage 2. As shown in FIG. 5, for example, the address generator (refer to the reference number 320 of FIG. 3) generates and provides read addresses 000 and 010 to the first bank 431 and the second bank 433 respectively. Next, the first bank 431 reads and provides the data items stored at even-numbered addresses 000e and 100e to the first computation unit 451, and the second bank 433 reads and provides the data items stored at odd-numbered addresses 000o and 100o to the second computation unit 453. The first and second computation units 451 and 453 use twiddle factors W to perform the butterfly computations.

Next, the first computation unit 451 rewrites at the upper address 000e of the first bank 431 the data items computed over the data items read at the upper address 000e of the first bank 431, and rewrites at the upper address 000o of the second bank 433 the data items computed over the data items read at the lower address 100e. Likewise, the second computation unit 453 rewrites at the lower address of the first bank 431 the data items computed over the data items read at the upper address 000o of the second bank 433, and rewrites at the lower address 100o of the second bank 433 the data items computed over the data items read at the lower address 100o of the second bank 433.

Likewise, the butterfly computations are repeated with respect to stage 3 and stage 4.

As shown in FIG. 5, the Radix-2 based 16-point FFT according to the present invention is the same as the conventional Radix-2 based 16-point FFT shown in FIG. 1B as aforementioned, except that the present invention divides memory addresses into even-numbered addresses and odd-numbered addresses and performs two butterfly computations at the same time so as to reduce the processing time by half compared to the conventional FFT.

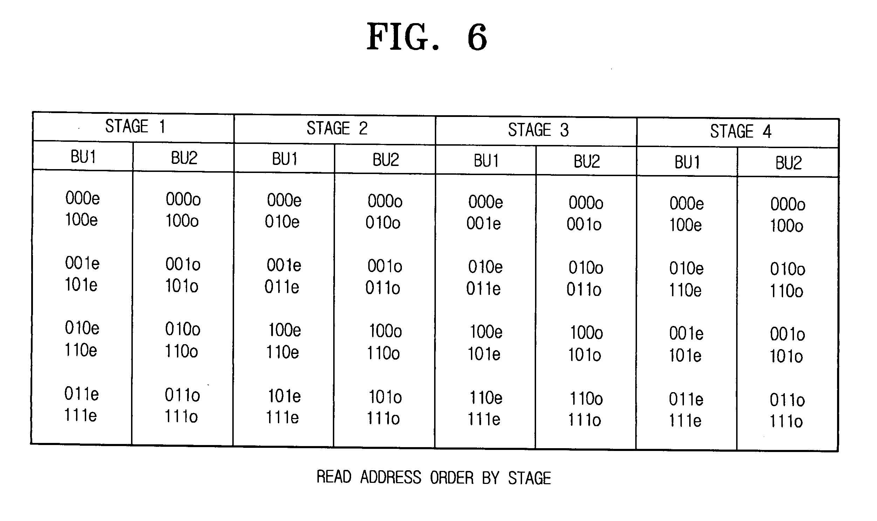

FIG. 6 shows read addresses by stage generated by the N/2-point address generator (refer to the reference number 320 of FIG. 3) corresponding to a memory structure according to an exemplary embodiment of the present invention, with respect to the 16-point FFT, for example. As shown in FIG. 6, the generated read addresses by stage can be expressed in a read address generation manner and a bit-reverse manner with respect to the N/2-point, that is, the Radix-2 based 8-point FFT. The read addresses at stages 1 to 3 have the same form as those with respect to the 8-point FFT, and the read addresses at stage 4 have the same form as bit-reverse addresses with respect to results of the 8-point FFT.

As above, the data items processed by the fast Fourier transform according to an exemplary embodiment of the present invention have a new digit-reverse manner.

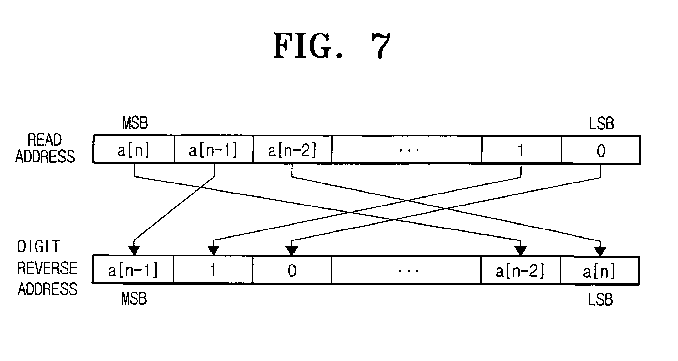

FIG. 7 is a view for showing a digit-reverse manner according to an exemplary embodiment of the present invention, and the digit-reverse manner according to an exemplary embodiment of the present invention will be described with reference to the Radix-2 based 16-point FFT process shown in FIG. 5.

After the completion of the Radix-2 based 16-point FFT in the aforementioned manner, the memory addresses for the data items rewritten in the memory are messed up with respect to the memory addresses at which input data items are stored. Therefore, the digit-reverse addresses are generated in order for computed data items to be read in order of the input data items.

The digit-reverse address generator 370 generates digit-reverse addresses in the manner shown in FIG. 7 based on count values $0 \sim N-1$ outputted in order from the counter (refer to the reference number 310 of FIG. 3). As shown in FIG. 7, if a read address corresponding to the count values is denoted as $a[n]\, a[n-1]\, a[n-2]...1\, 0$, the digit-reverse address generator 370 takes the second most significant bit, $a[n-1]$, as the most significant bit of a digit-reverse address, and generates a digit-reverse address with respect to the remaining bits except for the second most significant bit in the bit-reverse manner. Therefore, the digit-reverse address is obtained as $a[n-1]\, 10\, ...\, a[n-2]\, a[n]$.

As described above, the digit-reverse manner of FIG. 7 according to the present invention follows the principle as described below. For example, below is a digit-reverse address with respect to a write address (W_ADD) '000o' (hereinafter, '0001' will be used for '000o') at stage 4 of FIG. 5. First, the write address '0001' turns into a bit-reverse address '1000' in the Radix-2 structure, and a write address (W_ADD) of the stage 4 at the location of '1000' turns into '010e (0100)'. Therefore, the read address '0001' of the counter turns into a digit-reverse address '0100'.

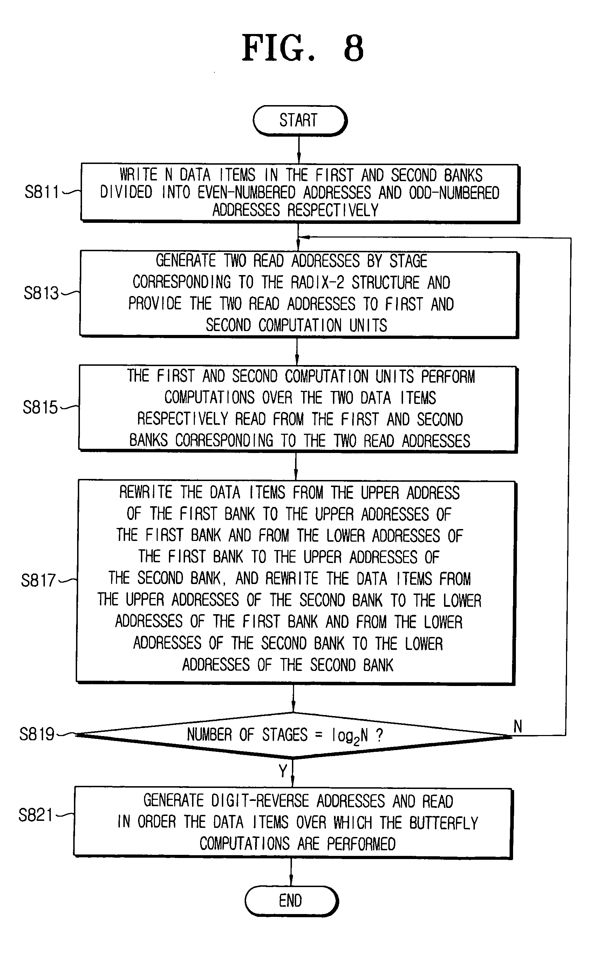

FIG. 8 is a flow chart for showing a fast Fourier transform process of the fast Fourier transform device having the two butterfly computation structures based on the Radix-2 structure according to the present invention. Hereinafter, detailed descriptions will be made on the fast Fourier transform process with reference to FIGS. 3- 5.

If the fast Fourier transform device inputs N data items, the counter 310 outputs count values corresponding to the input data items, and the N/2-point address generator 320 generates memory addresses based on the count values.

The memory part 330 has the first bank 331 and the second bank 333 that have the memory addresses divided into even-numbered addresses and odd-numbered addresses respectively, so the even-numbered input data items are written in the first bank 331 and the odd-numbered input data items are written in the second bank 333 according to the division of the memory part 330 **(S811).**

The N/2-point address generator 320 generates two read addresses corresponding to the Radix-2 butterfly computation structure, and the two generated read addresses are provided to the first computation unit 351 and the second computation unit 353 **(S813).**

Next, the first computation unit 351 performs the butterfly computations by use of the two data items read from the first bank 331 corresponding to the two read addresses, and the second computation unit 353 performs the butterfly computations by use of the two data items read from the second bank 333 corresponding to the two read addresses **(S815).**

Next, the first computation unit 351 rewrites at upper addresses of the first bank 331 the data items computed over the data items read from the upper addresses of the first bank 331, and rewrites at upper addresses of the second bank 333 the data items computed over the data items read from the lower addresses of the first bank 331. The second computation unit 353 rewrites at lower addresses of the first bank 331 the data items computed over the data items read from the upper addresses of the second bank 333, and rewrites at lower addresses of the second bank 333 the data items computed over the data items read from the lower addresses of the second bank 333 **(S817).**

The butterfly computations are repeated as many times as the number of stages $\log_2 N$ with respect to N data items, and the computed data items are rewritten in the first bank 331 and the second bank 333 (S819).

After the butterfly computations are repeated as many times as the number of stages $\log_2 N$, the digit-reverse address generator 370 generates digit-reverse addresses based on the count values $0 \sim N-1$ of the counter 310 in the manner shown in FIG. 7, and reads in order the computed data items written in the memory part 330 **(S821).**

As stated above, two butterfly computation structures operate at the same time in performing the fast Fourier transform. Therefore, an exemplary embodiment of the present invention has a two times faster processing speed. If the 1024-point FFT is performed, 5140 clocks are needed since (3 + (1024/2 - 1)) x $\log_2 1024$ = 5140, which is a result similar to occasions of performing the Radix-4 based FFT over data items in the form of $4^n$, and an exemplary embodiment of the present invention can process $2^n$-type data items with which the Radix-4 structure does not deal since exemplary embodiments of the present invention are structured based on the Radix-2 algorithm. Further, prior art does not have a great impact on the FFT performance time since the art mainly focuses on simplifying the butterfly computation structure to obtain a faster computation speed, whereas the present invention can reduce the total FFT performance time in half with the existing butterfly computation structure applied.

In occasions of using the FFT in digital audio broadcast (DAB), digital multimedia broadcast (DMB), wireless local area network (LAN), and so on, which are application fields using orthogonal frequency division multiplex (OFDM) technologies, the memory area is at least two times more than the amount of data to be processed. That is, new data needs another memory area since the FFT over the data received and stored in the previous period and the reception of the new data are performed at the same time. However, an OFDM signal has intervals in which data is carried and NULL intervals in which no data is carried on behalf of synchronizations.

If the FFT is performed in these NULL intervals according to the improvements of the processing speed as a result of an exemplary embodiment of the present invention, there only has to have a memory area for data corresponding to one period rather than two times the memory area as above. That is, if the FFT processing speed becomes faster according to an exemplary embodiment of the present invention, an effect is reducing of the memory size in half.

Two butterfly computation structures operate at the same time since one memory is divided for use depending on even- or odd-numbered addresses. However, the addressing manner used in an exemplary embodiment of the present invention is equally applied to the divided memories, and can be simply implemented since the addressing mode and the bit-reverse addressing mode are used for the FFT over half the number of data items to be processed. Further, an exemplary embodiment of the present invention can arrange in order memory addresses messed up during the FFT computations by use of the new digit-reverse manner.

The fast Fourier transform device according to an exemplary embodiment of the present invention operates the two butterfly computation structures at the same time so as to reduce the processing time by half as well as to simplify the implementation thereof. In order to use the two butterfly computation structures at the same time, the fast Fourier transform device divides into even-numbered addresses and odd-numbered addresses the addresses of the memory storing data items to be processed so that the memory is divided into the first bank and the second bank for data processing. Therefore, the fast Fourier transform device reads two data items at the same time from the two banks, and independently performs the two butterfly computations.

Further, the fast Fourier transform device applies the new digit-reverse manner corresponding to the butterfly computation structure according to an exemplary embodiment of the present invention.

The foregoing exemplary embodiments and advantages are merely exemplary and are not to be construed as limiting the present invention. The present teaching can be readily applied to other types of apparatuses. Also, the description of the exemplary embodiments of the present invention is intended to be illustrative, and not to limit the scope of the claims, and many alternatives, modifications, and variations will be apparent to those skilled in the art.

**Claims**

1. A fast Fourier transform device processing N data items, comprising:

   a memory part having N memory addresses at which the N data items are written, and having a structure dividing the memory addresses into even-numbered addresses and odd-numbered addresses;
   an address generation unit generating addresses each including bits except for a least significant bit with respect to the memory addresses; and
   a computation part reading the data items at the even-numbered addresses and odd-numbered addresses based on the addresses generated in the address generation unit, and performing Radix-2 based butterfly computations,

   wherein N is an integer.

2. The fast Fourier transform device of claim 1, wherein the memory part comprises:

   a first bank including the even-numbered memory addresses each having the least significant bit of '0'; and
   a second bank including the odd-numbered memory addresses each having the least significant bit of '1'.

3. The fast Fourier transform device of claim 1, wherein the address generation unit generates N/2 addresses by each of $\log_2 N$ stages.

4. The fast Fourier transform device of claim 1, wherein the computation part comprises:

   a first computation unit performing the Radix-2 based butterfly computations using the data items read at the even-numbered addresses based on the generated addresses;
   a second computation unit performing the Radix-2 based butterfly computations using the data items read at the odd-numbered addresses based on the generated addresses; and
   a ROM storing, in advance, twiddle factors for the Radix-2 based butterfly computations.

5. The fast Fourier transform device of claim 4, wherein the first computation unit performs the computations using the data items read at upper even-numbered addresses and lower even-numbered addresses, and the second computation unit performs the computations using the data items read at upper odd-numbered addresses and lower odd-numbered addresses, the first computation unit rewrites at the upper even-numbered addresses the data items computed over the data items read at the upper even-numbered addresses, and rewrites at the upper odd-numbered addresses the data items computed over the data items read at the lower even-numbered addresses, and the second computation unit rewrites at the lower even-numbered addresses the data items computed over the data items read at the upper odd-numbered addresses, and rewrites at the lower odd-numbered addresses the data items computed over the data items read at the lower odd-numbered addresses.

6. The fast Fourier transform device of claim 1, further comprising:

   a counter outputting count values corresponding to the N data items; and
   a digit-reverse address generation unit generating digit-reverse addresses based on the count values.

7. The fast Fourier transform device of claim 6, wherein the digit-reverse addresses each have a second most significant bit of a read address corresponding to a count value in place of a first most significant bit and the remaining bits of the read address in place of respective bits in a bit-reverse manner.

8. A fast Fourier transform method for performing fast Fourier transform over N data items, comprising:

   (a) writing the N data items in a memory having N memory addresses;
   (b) generating N/2 addresses by each of $\log_2 N$ stages;

(c) reading data items at even-numbered addresses and odd-numbered addresses of the memory based on the generated addresses, and performing Radix-2 based butterfly computations over the data items by stage, and rewriting the computed data items in the memory;

(d) generating digit-reverse addresses after completing the Radix-2 based butterfly computations with respect to the $(\log_2 N)$th stage; and

(e) reading the data items rewritten in the memory according to the digit-reverse addresses,

wherein N is an integer.

9. The fast Fourier transform method of claim 8, wherein (c) comprises:

(c-1) performing the computations over data items read at upper even-numbered addresses and lower even-numbered addresses based on the generated addresses;

(c-2) performing the computations over data items read at upper odd-numbered addresses and lower odd-numbered addresses based on the generated addresses; and

(c-3) rewriting at the upper even-numbered addresses the data items computed over the data items read at the upper even-numbered addresses, rewriting at the upper odd-numbered addresses the data items computed over the data items read at the lower even-numbered addresses, rewriting at the lower even-numbered addresses the data items computed over the data items read at the upper odd-numbered addresses, and rewriting at the lower odd-numbered addresses the data items computed over the data items read at the lower odd-numbered addresses.

10. The fast Fourier transform method of claim 9, wherein (d) comprises:

(d-1) outputting count values corresponding to the N data items after completing the Radix-2 based butterfly computations at the $(\log_2 N)$th stage; and

(d-2) generating digit-reverse addresses based on the count values.

11. The fast Fourier transform method of claim 10, wherein the digit-reverse addresses each have a second most significant bit of a read address corresponding to a count value in place of a first most significant bit and the remaining bits of the read address in place of respective bits in a bit-reverse manner.

# FIG. 1A

# FIG. 1B

# FIG. 1C

| CLOCK | 0 | 1 | 2 | 3 | 4 | 5 | 6 | 7 |
|---|---|---|---|---|---|---|---|---|
| MEMORY READ ADDRESS | n | m | n+1 | m+1 | n+2 | m+2 | n+3 | m+3 |
| MEMORY WRITE ADDRESS | ←——3CLOCK——→ | | | n | m | n+1 | m+1 | n+2 |
| A | | A[n] | | A[n+1] | | A[n+2] | | A[n+3] |
| B | | | B[m] | | B[m+1] | | B[m+2] | |
| ± | | | | $A[n] \pm B[m]$ | | $A[n+1] \pm B[m+1]$ | | $A[n+2] \pm B[m+2]$ |
| W | | | | W[p] | | W[p+1] | | W[p+2] |
| A' | | | | A'[n] | | A'[n+1] | | A'[n+2] |
| B' | | | | | B'[m] | | B'[m+1] | |

# FIG. 2A

# FIG. 2B

# FIG. 2C

# FIG. 2D

| CLOCK | 0 | 1 | 2 | 3 | 4 | 5 | 6 | 7 | 8 | 9 | 10 | 11 | 12 | 13 | 14 |
|---|---|---|---|---|---|---|---|---|---|---|---|---|---|---|---|
| MEMORY READ ADDRESS | n | m | l | k | n+1 | m+1 | l+1 | k+1 | n+2 | m+2 | l+2 | k+2 | n+3 | m+3 | l+3 |
| MEMORY WRITE ADDRESS | ← | | 7CLOCK | | | | → | n | m | l | k | n+1 | m+1 | l+1 | k+1 |
| A | | | | A[n] | | | | A[n+1] | | | A[n+2] | | | A[n+3] | |
| B | | | | | B[m] | | | | B[m+1] | | | B[m+2] | | | ... |
| C | | | | | | C[l] | | | | C[l+1] | | | C[l+2] | | |
| D | | | | | | | D[k] | | | | D[k+1] | | | D[k+2] | |
| a,c | | | | | | | $A[n] \pm C[l]$ | | | $A[n+1] \pm C[l+1]$ | | | | $A[n+2] \pm C[l+2]$ | |
| b,d | | | | | | | | $B[m] \pm D[k]$ | | | $B[m+1] \pm D[k+1]$ | | | | ... |
| a',c' | | | | | | | | | $a[0] \pm b[0]$ | | | $a[1] \pm b[1]$ | | | |
| b',d' | | | | | | | | | $c[0] \pm d[0]$ | | | | $c[1] \pm d[1]$ | | |
| W1 | | | | | | | | | W1[p] | | | | W1[p+1] | | |
| W2 | | | | | | | | | | W2[q] | | | | W2[q+1] | |
| W3 | | | | | | | | | | | W3[r] | | | | W3[r+1] |
| A' | | | | | | | | | | A'[n] | | | | A'[n+1] | |
| B' | | | | | | | | | | | B'[m] | | | | B'[m+1] |
| C' | | | | | | | | | | | | C'[l] | | | C'[l+1] |
| D' | | | | | | | | | | | | | D'[k] | | ... |

EP 1 553 503 A2

# FIG. 3

EP 1 553 503 A2

# FIG. 4

EP 1 553 503 A2

# FIG. 5

READ/WRITE ADDRESSES BY STAGE

# FIG. 6

| STAGE 1 | | STAGE 2 | | STAGE 3 | | STAGE 4 | |
|---|---|---|---|---|---|---|---|
| BU1 | BU2 | BU1 | BU2 | BU1 | BU2 | BU1 | BU2 |
| 000e | 000o | 000e | 000o | 000e | 000o | 000e | 000o |
| 100e | 100o | 010e | 010o | 001e | 001o | 100e | 100o |
| 001e | 001o | 001e | 001o | 010e | 010o | 010e | 010o |
| 101e | 101o | 011e | 011o | 011e | 011o | 110e | 110o |
| 010e | 010o | 100e | 100o | 100e | 100o | 001e | 001o |
| 110e | 110o | 110e | 110o | 101e | 101o | 101e | 101o |
| 011e | 011o | 101e | 101o | 110e | 110o | 011e | 011o |
| 111e | 111o | 111e | 111o | 111e | 111o | 111e | 111o |

READ ADDRESS ORDER BY STAGE

EP 1 553 503 A2

# FIG. 7

READ
ADDRESS

| MSB | | | | | LSB |
|---|---|---|---|---|---|
| a[n] | a[n−1] | a[n−2] | · · · | 1 | 0 |

DIGIT
REVERSE
ADDRESS

| a[n−1] | 1 | 0 | · · · | a[n−2] | a[n] |
|---|---|---|---|---|---|
| MSB | | | | | LSB |

# FIG. 8

START

S811 — WRITE N DATA ITEMS IN THE FIRST AND SECOND BANKS DIVIDED INTO EVEN-NUMBERED ADDRESSES AND ODD-NUMBERED ADDRESSES RESPECTIVELY

S813 — GENERATE TWO READ ADDRESSES BY STAGE CORRESPONDING TO THE RADIX-2 STRUCTURE AND PROVIDE THE TWO READ ADDRESSES TO FIRST AND SECOND COMPUTATION UNITS

S815 — THE FIRST AND SECOND COMPUTATION UNITS PERFORM COMPUTATIONS OVER THE TWO DATA ITEMS RESPECTIVELY READ FROM THE FIRST AND SECOND BANKS CORRESPONDING TO THE TWO READ ADDRESSES

S817 — REWRITE THE DATA ITEMS FROM THE UPPER ADDRESS OF THE FIRST BANK TO THE UPPER ADDRESSES OF THE FIRST BANK AND FROM THE LOWER ADDRESSES OF THE FIRST BANK TO THE UPPER ADDRESSES OF THE SECOND BANK, AND REWRITE THE DATA ITEMS FROM THE UPPER ADDRESSES OF THE SECOND BANK TO THE LOWER ADDRESSES OF THE FIRST BANK AND FROM THE LOWER ADDRESSES OF THE SECOND BANK TO THE LOWER ADDRESSES OF THE SECOND BANK

S819 — NUMBER OF STAGES = $\log_2 N$ ?    N

Y

S821 — GENERATE DIGIT-REVERSE ADDRESSES AND READ IN ORDER THE DATA ITEMS OVER WHICH THE BUTTERFLY COMPUTATIONS ARE PERFORMED

END